# EUROPÄISCHE PATENTSCHRIFT

(11) **EP 2 404 504 B1**
(45) Veröffentlichungstag und Bekanntmachung des Hinweises auf die Patenterteilung: **17.08.2016**
(21) Anmeldenummer: 11005491.3
(22) Anmeldetag: 06.07.2011
(51) Int. Cl.: A22C 15/00

(54) **Anlage zur Anordnung einer Wurstkette auf einem Spieß**
Assembly for arranging a sausage chain on a skewer
Installation d'agencement d'une chaîne de saucisses sur une broche

(30) Priorität: 08.07.2010 DE 102010026530
(43) Veröffentlichungstag der Anmeldung: 11.01.2012
(73) Patentinhaber: Heinrich Maschinen und Produkte für Die Fleischwarenindustrie Ges. mbH, 72622 Nürtingen-Zizishausen (DE)
(72) Erfinder: Greiner, Wolfgang, 72622 Nürtingen (DE)
(74) Vertreter: Kohler Schmid Möbus Patentanwälte

(56) Entgegenhaltungen:
- US-A1- 2004 084 283
- US-B1- 7 160 184

## Beschreibung

Die Erfindung betrifft eine Anlage zur gleichmäßigen Anordnung einer Wurstkette auf einem Spieß, insbesondere einem Räucherspieß, mit den Merkmalen des Oberbegriffs des Anspruchs 1.

Eine solche Anlage ist aus der US 7,160,184 B1 bereits bekannt. Auch die US 2004/084 283 A1 beschreibt eine Anlage zum Auffädeln einer Wurstkette auf einem Spieß nach dem Oberbegriff des Anspruchs 1.

Bei der Herstellung von Würsten wird Wurstmaterial in einen Natur- oder Kunstdarm gefüllt. Der Darm wird zwischen den einzelnen befüllten Abschnitten verdrillt und die so entstandene Wurstkette gekocht. Alternativ oder zusätzlich dazu kann die Wurstkette geräuchert werden. Die Wurstkette muss hierzu auf einen Spieß gefädelt werden, der anschließend in eine Räucherkammer gehängt wird.

Die zur Herstellung der Wurstkette eingesetzten Naturdärme weisen keinen gleichmäßigen Durchmesser auf, sondern unterliegen Durchmesserschwankungen. Aufgrund der Durchmesserschwankungen ist es schwer möglich, Würste in gleichmäßigen Längen mit gleichmäßigem Fülldruck herzustellen. Bei einer Verengung des Durchmessers platzen die Würste beim Kochen und bei einer Erweiterung sind sie nicht fest genug gefüllt.

Würste, die durch die Durchmesserschwankung beschädigt sind oder eine schlechte Naturdarmqualität aufweisen, müssen aus der Wurstkette getrennt und aussortiert werden, bevor die Wurstkette auf den Spieß aufgefädelt wird.

Der Erfindung liegt demgegenüber die Aufgabe zugrunde, eine Anordnung bereitzustellen, die es ermöglicht, Wurstketten mit Würsten unterschiedlicher Durchmesser in gleichmäßigem Abstand auf einen Spieß zu hängen.

Diese Aufgabe wird erfindungsgemäß durch eine Anlage mit den Merkmalen des Anspruchs 1 gelöst.

Eine solche Anlage ist voll- oder halbautomatisch bedienbar. Fehlerhafte Würste werden aus der Wurstkette herausgetrennt und die durch eine Schweißvorrichtung komplettierte Wurstkette wird von Hand oder auch automatisch an den Mitnehmern der Anlage angebracht. Dabei werden die Verbindungsabschnitte zwischen einzelnen Würsten in die Haken der Mitnehmer eingesetzt. Durch die Distanzhalter werden die im Haken gehaltenen Wurstpaare auseinandergespreizt. Aufgrund der Bewegung der Fördereinrichtung werden die an der Fördereinrichtung befestigten Mitnehmer über den an der Anlage befestigten Spieß bewegt und die an den Mitnehmern gehaltene Wurstkette auf den Spieß aufgefädelt. Der Spieß befindet sich dadurch zentrisch in der durch die Mitnehmer schraubenartig angeordneten Wurstkette. Durch das Stellmittel werden die Haken der Mitnehmer aus der Transportstellung in die Abwurfstellung gebracht und die Wurstkette auf den Spieß abgeworfen. Durch die erfindungsgemäße Anlage kann die Wurstkette somit gleichmäßig auf dem Spieß angeordnet werden.

Der Distanzhalter kann in Form einer Platte mit seitlichen Ausnehmungen ausgebildet sein. Die seitlichen Ausnehmungen dienen dabei der Zentrierung der beiden auf dem Mitnehmer hängenden Würste. Die Ausnehmungen können dabei vorzugsweise der Außenkontur der Wurst angepasst sein. Beispielsweise können die Ausnehmungen eine kreisbogenförmige Kontur aufweisen, die dem Durchmesser der Würste angepasst ist.

In einem bevorzugten Ausführungsbeispiel der Erfindung kann der Haken durch eine mit einer sich einwärts verjüngenden Kerbe versehenen Platte gebildet werden. Eine solche Ausbildung des Hakens ermöglicht gleichzeitig ein sicheres Halten des am jeweiligen Mitnehmer befestigten Wurstpaares und ein einfaches Einführen des zwischen dem Wurstpaar ausgebildeten Verbindungsabschnitts in die sich verjüngende Kerbe.

Ein Aufspreizen der Wurstpaare wird besonders einfach erzielt, wenn der Haken oberhalb des Distanzhalters und zwischen dessen Ausnehmungen angeordnet ist.

Um die Wurstkette in aufgespreiztem Zustand über den Spieß abzuwerfen, können der Distanzhalter und der Haken über das Stellmittel gemeinsam verschwenkbar sein.

Der Abstand der an der Fördereinrichtung angeordneten Mitnehmer ist vorzugsweise in der Transportstellung der Mitnehmer in dem geraden Abschnitt der Fördereinrichtung kleiner als der Durchmesser der Würste der anzuordnenden Wurstkette. Selbst im Falle eines sich vom Haken lösenden Wurstpaares wird das Wurstpaar auf diese Art und Weise sicher am Mitnehmer bzw. zwischen zwei Mitnehmern gehalten.

Die Fördereinrichtung kann in Form einer endlosen Kette ausgeführt sein. Die Kette muss dabei nicht zwingend durchgängig mit Mitnehmern bestückt sein. Die Anzahl der Mitnehmer kann vielmehr auf die Länge des zu bestückenden Räucherspießes abgestimmt sein. Nach Abwurf der Wurstkette auf den Spieß bleibt in diesem Fall Zeit, den Spieß auszuwechseln, bevor eine neue Wurstkette auf die Mitnehmer aufgesetzt wird.

Die Anlage kann Wurstketten unterschiedlichen Durchmessers verarbeiten. Da die Mitnehmer, insbesondere die Distanzhalter, auf den Durchmesser der Würste abgestimmt sind, sind die Mitnehmer kassettenweise austauschbar angeordnet. Soll die Anlage auf Würste mit einem anderen Durchmesser umgestellt werden, so werden mehrere Mitnehmer in einer Kassette von der Fördereinrichtung abgenommen und eine neue Kassette mit entsprechend angepassten Mitnehmern auf die Fördereinrichtung aufgesetzt.

Bei einer besonders einfachen Ausgestaltung des Stellmittels kann dieses eine Achse aufweisen, die an dem Grundkörper des Mitnehmers drehbar gelagert ist.

Die Achse kann einen abgewinkelten Endabschnitt aufweisen, dessen freies Ende parallel zu einem Hauptabschnitt der Achse abgewinkelt ist. Hierdurch kann auf einfache Art und Weise ein Hebel ausgebildet werden, durch den der Haken aus der Transportstellung in die Abwurfstellung geschwenkt werden kann.

Der Hauptabschnitt der Achse kann an dem dem abgewinkelten Endabschnitt gegenüberliegenden Ende über den Grundkörper des Mitnehmers vorstehen. Die über den Grundkörper vorstehende Achse bildet dabei eine Barriere für die aufzuhängenden Würste. Diese Barriere kann verhindern, dass an einem Mitnehmer befestigte Würste hinter den Mitnehmer rutschen.

An dem abgewinkelten Endabschnitt kann eine Rolle angeordnet sein. In diesem Fall kann die Rolle zur Betätigung des Stellmittels eingesetzt werden. Die Rolle kann drehbar oder fest an dem abgewinkelten Endabschnitt angeordnet sein.

In einem besonders bevorzugten Ausführungsbeispiel der Erfindung kann die Anlage eine Schiene zur Aufnahme der Endabschnitte oder der an den Endabschnitten angeordneten Rollen aufweisen, wobei durch Anheben oder Absenken der Schiene die Halter zwischen ihrer Transport- und ihrer Abwurfstellung verschwenkbar sein können. Das Anheben oder Absenken der Schiene ermöglicht dadurch das gleichzeitige Abwerfen aller an den jeweiligen Verbindungsabschnitten gehaltenen Würste der Wurstkette auf den Räucherspieß.

Nach Abwerfen der Wurstkette von den Mitnehmern liegt die Wurstkette an ihren Verbindungsstellen auf dem Spieß auf. Um die Auflagefläche der Wurstkette auf dem Spieß so gering wie möglich zu halten, werden vorzugsweise runde oder dreieckige Spieße eingesetzt. In der Spießhalterung der erfindungsgemäßen Anlage können daher vorzugsweise im Querschnitt runde oder dreieckige Spieße aufnehmbar sein.

Die Erfindung umfasst weiterhin einen Mitnehmer für eine Anlage zur Anordnung einer Wurstkette auf einem Spieß, insbesondere einem Räucherspieß, mit einem Grundkörper und einem am Grundkörper angeordneten Haken zur Aufnahme eines jeweils zwischen benachbarten Würsten der Wurstkette vorhandenen Verbindungsabschnitts, wobei der Haken durch ein an dem Mitnehmer angeordnetes Stellmittel zumindest zwischen einer Transportstellung und einer Abwurfstellung zum Abwurf der Wurstkette auf einen Spieß bewegbar ist und an dem Mitnehmer ein Distanzhalter zur Spreizung des im Haken gehaltenen Wurstpaares angeordnet ist.

Weitere Vorteile ergeben sich aus der Zeichnung, die ein bevorzugtes Ausführungsbeispiel einer erfindungsgemäße Anlage zur Anordnung einer Wurstkette auf einem Spieß darstellt.

Es zeigen:
- Fig. 1: eine teilweise Seitenansicht einer erfindungsgemäßen Anlage;
- Fig. 2a: eine Frontansicht eines erfindungsgemäßen Mitnehmers;
- Fig. 2b: eine Seitenansicht des Mitnehmers aus Fig. 2a.

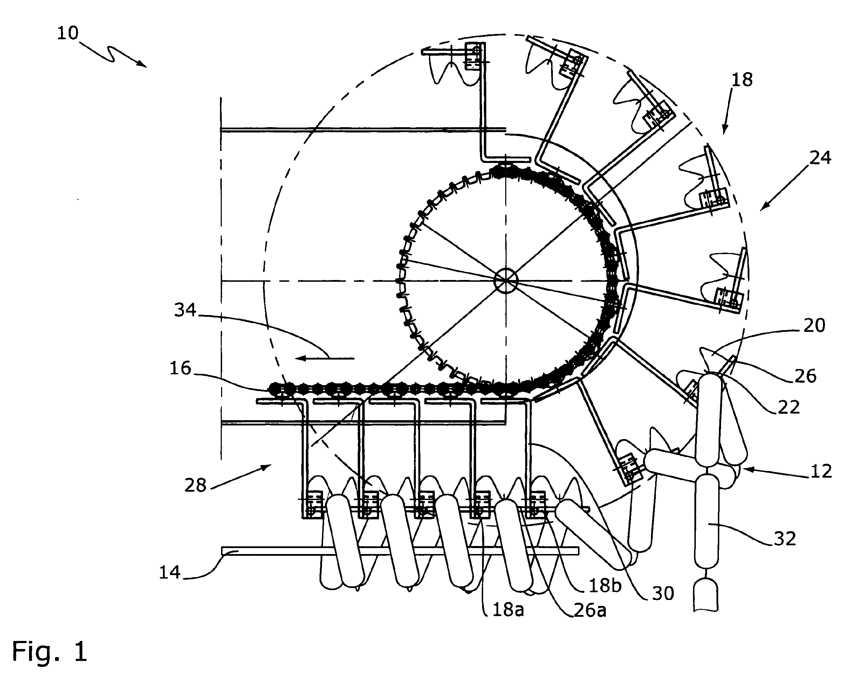

Fig. 1 zeigt einen Ausschnitt einer erfindungsgemäßen Anlage 10 zur Anordnung einer Wurstkette 12 auf einem Spieß 14. Anstelle einer Wurstkette 12 können auch Wurstringe oder dergleichen auf dem Spieß 14 angeordnet werden. Die Anlage 10 weist hierzu eine Fördereinrichtung 16 auf, die in Form einer Endloskette ausgebildet ist. Zur Wahrung der Übersicht ist in der Zeichnung nur ein Teil der Fördereinrichtung 16 dargestellt. An der Fördereinrichtung 16 sind mehrere Mitnehmer 18 angeordnet. Die Mitnehmer 18 weisen jeweils einen Haken 20 auf, in den eine Verbindungsstelle 22 der Wurstkette 12 eingehängt wird. Die Verbindungsstelle 22 der Wurstkette 12 wird von Hand oder automatisiert in den Haken 20 eingeführt. Dies geschieht vorzugsweise an einem gebogenen Abschnitt 24 der Fördereinrichtung 16. Im gebogenen Abschnitt 24 weisen die Mitnehmer 18 durch die radiale Spreizung einen Abstand zueinander auf, sodass die Verbindungsstellen 22 der Wurstkette 12 einfach in den Haken 20 eingelegt werden können.

Die Mitnehmer 18 weisen jeweils einen Distanzhalter 26 auf. In einem geraden Abschnitt 28 der Fördereinrichtung 16 stehen die Mitnehmer 18 so eng hintereinander, dass der Abstand zwischen einem Distanzhalter 26a eines Mitnehmers 18a und einem Grundkörper 30b eines hinter dem Mitnehmer 18a angeordneten Mitnehmers 18b kleiner ist als der Durchmesser der Würste 32 der Wurstkette 12. Eine solche Anordnung hat den Vorteil, dass eine unabsichtlich vom Haken 20 gelöste Wurstkette 12 immer noch sicher von den Mitnehmern 18 gehalten wird, da die Wurstkette 12 nicht zwischen dem Distanzhalter 26a und dem Grundkörper 30 hindurchfallen kann. Durch eine Bewegung der Fördereinrichtung 16 in Förderrichtung 34 wird die Wurstkette 12 auf den Spieß 14 aufgefädelt. Die Würste 32 der Wurstkette 12 werden dabei durch den Distanzhalter 26 gespreizt.

Sobald die Wurstkette 12 auf dem Spieß 14 aufgefädelt ist, wird der Haken 20 aus einer dargestellten Transportstellung in eine Abwurfstellung bewegt, wodurch die Wurstkette 12 auf den Spieß 14 abgeworfen wird. Ein hierzu nötiges Stellmittel der Mitnehmer 18 ist in Fig. 1 aus Gründen der Übersichtlichkeit nicht gezeigt.

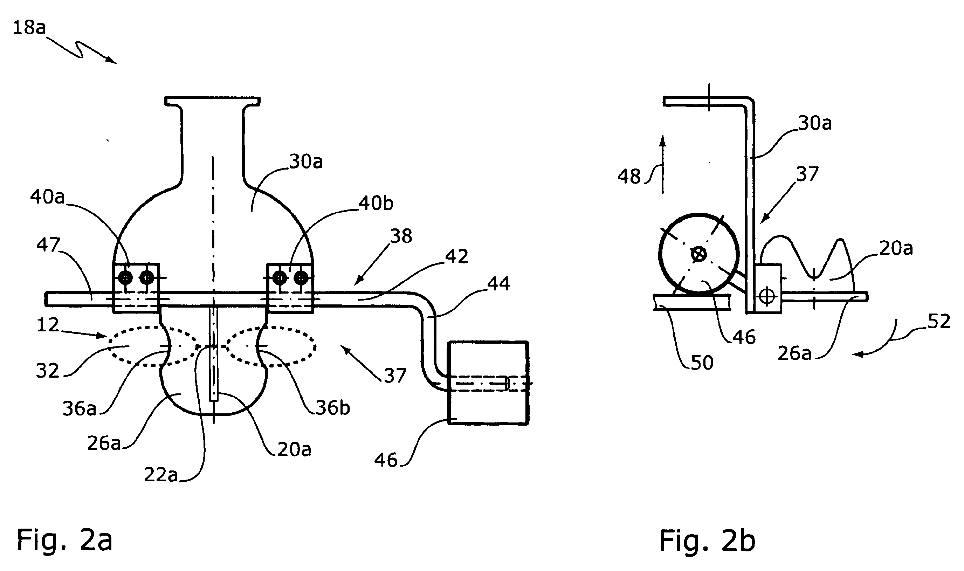

In Fig. 2a ist ein erfindungsgemäßer Mitnehmer 18a dargestellt. Der Distanzhalter 26a des Mitnehmers 18a ist als eine Platte mit Ausnehmungen 36a, 36b ausgebildet. Der Radius der runden Ausnehmungen 36a, 36b ist dabei an den Außendurchmesser der Würste 32 der Wurstkette 12 (gestrichelt eingezeichnet) angepasst. Die Würste 32 sind an ihrer Verbindungsstelle 22a in einen Haken 20a eingeführt. Der Haken 20a ist mit dem Distanzhalter 26a verschweißt. Der Distanzhalter 26a ist wiederum mit einem Stellmittel 37 verbunden, das eine Achse 38, die in Lagern 40a, 40b gelagert ist, aufweist. Die Achse 38 weist einen Hauptabschnitt 42 und einen abgewinkelten Endabschnitt 44 mit einer daran angeordneten Rolle 46 auf. Die Achse 38 bildet damit einen Hebel zur Bewegung des Distanzhalters 26a und des Hakens 20a. Die Achse 38 dient weiterhin durch ein über einen Grundkörper 30a des Mitnehmers 18a vorstehendes Ende 47 als Barriere für die Würste 32, falls diese fehlerhaft eingehängt werden.

Wie aus Fig. 2b ersichtlich ist, wird durch eine Bewegung der Rolle 46 in Richtung des Pfeils 48 der Distanzhalter 26a mit dem daran angeordneten Haken 20a in Richtung des Pfeils 52 nach unten geschwenkt. Der Haken 20a, der als eine mit einer sich einwärts verjüngenden Kerbe versehene Platte ausgebildet ist, wird dadurch aus der dargestellten Transportstellung in die Abwurfstellung bewegt. Die in Fig. 2b nicht mehr dargestellte Wurstkette wird somit durch das Stellmittel 37 nach unten abgeworfen. Nachdem die Wurstkette 12 auf den Spieß abgeworfen ist, kann der Spieß mit der gleichmäßig darauf angeordneten Wurstkette 12 von einer nicht dargestellten Spießhalterung abgenommen und in eine Räucherkammer (nicht gezeigt) oder dergleichen gebracht werden.

## Patentansprüche

1. Anlage (10) zur Anordnung einer Wurstkette (12) auf einem Spieß (14), insbesondere einem Räucherspieß, mit einer zumindest einen geraden Abschnitt (28) und zumindest einen gebogenen Abschnitt (24) aufweisenden Fördereinrichtung (16), einer Spießhalterung zur Anordnung eines Spießes (14) parallel zu dem geraden Abschnitt (28) der Fördereinrichtung (16) und mehreren, an der Fördereinrichtung (16) angeordneten Mitnehmern (18), die einen Grundkörper (30a, 30b) und einen am Grundkörper (30a, 30b) angeordneten Haken (20) zur Aufnahme eines jeweils zwischen benachbarten Würsten (32) der Wurstkette (12) vorhandenen Verbindungsabschnitts (22) aufweisen, wobei der Haken (20) durch ein an den Mitnehmern (18) angeordnetes Stellmittel (37) zumindest zwischen einer Transportstellung und einer Abwurfstellung zum Abwurf der Wurstkette (12) auf den Spieß (14) bewegbar ist und an den Mitnehmern (18) ein Distanzhalter (26) zur Spreizung des im Haken (20) gehaltenen Wurstpaares angeordnet ist, **dadurch gekennzeichnet, dass** mehrere Mitnehmer (18) in einer Kassette angeordnet sind und die Kassette von der Fördereinrichtung (16) abnehmbar und eine neue Kassette mit Mitnehmern auf die Fördereinrichtung (16) aufsetzbar ist.

2. Anlage nach Anspruch 1, **dadurch gekennzeichnet, dass** der Distanzhalter (26) in Form einer Platte mit seitlichen Ausnehmungen (36a, 36b) ausgebildet ist.

3. Anlage nach einem der vorhergehenden Ansprüche, **dadurch gekennzeichnet, dass** der Haken (20) durch eine mit einer sich einwärts verjüngenden Kerbe versehene Platte gebildet ist.

4. Anlage nach Anspruch 2 oder 3, **dadurch gekennzeichnet, dass** der Haken (20) oberhalb des Distanzhalters (26) und zwischen dessen Ausnehmungen (36a, 36b) angeordnet ist.

5. Anlage nach einem der vorhergehenden Ansprüche, **dadurch gekennzeichnet, dass** der Distanzhalter (26) und der Haken (20) über das Stellmittel (37) gemeinsam verschwenkbar sind.

6. Anlage nach einem der vorhergehenden Ansprüche, **dadurch gekennzeichnet, dass** der Abstand der an der Fördereinrichtung (16) angeordneten Mitnehmer (18) in der Transportstellung der Mitnehmer (18) in dem geraden Abschnitt (28) der Fördereinrichtung (16) kleiner ist als der Durchmesser der Würste (32) der anzuordnenden Wurstkette (12).

7. Anlage nach einem der vorhergehenden Ansprüche, **dadurch gekennzeichnet, dass** das Stellmittel (37) eine Achse (38) aufweist, die an dem Grundkörper (30a, 30b) des Mitnehmers (18) drehbar gelagert ist.

8. Anlage nach Anspruch 7, **dadurch gekennzeichnet, dass** die Achse (38) einen abgewinkelten Endabschnitt (44) aufweist, dessen freies Ende parallel zu einem Hauptabschnitt (42) der Achse (38) abgewinkelt ist.

9. Anlage nach Anspruch 8, **dadurch gekennzeichnet, dass** der Hauptabschnitt (42) der Achse (38) an dem dem abgewinkelten Endabschnitt (44) gegenüberliegenden Ende (47) über den Grundkörper (30a, 30b) des Mitnehmers (18) vorsteht.

10. Anlage nach einem der Ansprüche 8 oder 9, **dadurch gekennzeichnet, dass** an dem abgewinkelten Endabschnitt (44) eine Rolle (46) angeordnet ist.

11. Anlage nach einem der vorhergehenden Ansprüche, **dadurch gekennzeichnet, dass** die Anlage (10) eine Schiene (50) zur Aufnahme des Endabschnitts oder der an dem Endabschnitt angeordneten Rollen (46) aufweist, wobei durch Anheben (48) oder Absenken der Schiene (50) der Haken (20) zwischen seiner Transport- und seiner Abwurfstellung verschwenkbar ist.

12. Anlage nach einem der vorhergehenden Ansprüche, **dadurch gekennzeichnet, dass** in der Spießhalterung im Querschnitt runde oder dreieckige Spieße aufnehmbar sind.

## Claims

1. An apparatus (10) for placing a string of sausages (12) on a stick (14), specifically a smoking stick, said apparatus comprising: a conveyor (16) having at least one straight section (28) and at least one curved section (24); a stick holder for orienting a stick (14) parallel to the straight section (28) of the conveyor (16); and a plurality of carriers (18) provided on the conveyor (16), said carriers (18) comprising a basic element (30a, 30b) and a hook (20), provided on the basic element (30a, 30b), for holding the connecting portion (22) present in each case between adjacent sausages (32) of the string of sausages (12), wherein adjusting means (37) disposed on the carriers (18) are capable of moving said hook (20) at least between a transport position and a release position for delivering the string of sausages (12) onto the stick (14), and a spacer (26) is disposed on said carriers (18) for spreading the pair of sausages held in the hook (20), **characterized in that** a plurality of carriers (18) are provided in a cartridge and the cartridge can be removed from the conveyor (16) and a new cartridge with carriers can be placed on the conveyor (16).

2. An apparatus according to Claim 1, **characterized in that** the spacer (26) takes the form of a plate with lateral recesses (36a, 36b).

3. An apparatus according to one of the preceding claims, **characterized in that** the hook (20) is formed by a plate provided with an inward-tapering notch.

4. An apparatus according to Claim 2 or 3, **characterized in that** the hook (20) is disposed above the spacer (26) and between its recesses (36a, 36b).

5. An apparatus according to one of the preceding claims, **characterized in that** the spacer (26) and hook (20) can be swivelled together as a unit by the adjusting means (37).

6. An apparatus according to one of the preceding claims, **characterized in that,** in the transport position of the carriers (18) in the straight section (28) of the conveyor (16), the spacing of the carriers (18) disposed on the conveyor (16) is smaller than the diameter of the sausages (32) of the string of sausages (12) to be placed on the stick.

7. An apparatus according to one of the preceding claims, **characterized in that** the adjusting means (37) include a pin (38), which is pivot-mounted on the basic element (30a, 30b) of the carrier (18).

8. An apparatus according to Claim 7, **characterized in that** the pin (38) has an angled end section (44), the free end of which is angled in such a way as to extend parallel to a main section (42) of the pin (38).

9. An apparatus according to Claim 8, **characterized in that,** at the end (47) lying opposite the angled end section (44), the main portion (42) of the pin (38) extends beyond the basic element (30a, 30b) of the carrier (18).

10. An apparatus according to one of Claims 8 or 9, **characterized in that** a roller (46) is mounted on the angled end section (44).

11. An apparatus according to one of the preceding claims, **characterized in that** the apparatus (10) includes a rail (50) for receiving the end section or roller (46) disposed on the end section and the hook (20) can be swivelled between its transport position and its release position by raising (48) or lowering of the rail (50).

12. An apparatus according to one of the preceding claims, **characterized in that** sticks with a round or triangular cross-section can be accommodated in the stick holder.

## Revendications

1. Installation (10) destinée à la disposition d'un chapelet de saucisses (12) sur une broche (14), en particulier une broche de fumage, avec un dispositif de transport (16) présentant au moins un tronçon (28) rectiligne et au moins un tronçon (24) courbé, un support de broche destiné à la disposition d'une broche (14) parallèlement au tronçon (28) rectiligne du dispositif de transport (16) et plusieurs entraîneurs (18) disposés sur le dispositif de transport (16) qui présentent un corps de base (30a, 30b) et un crochet (20) disposé sur le corps de base (30a, 30b) pour la réception d'un tronçon de raccordement (22) présent respectivement entre des saucisses (32) voisines du chapelet de saucisses (12), dans laquelle le crochet (20) peut être déplacé par un moyen de réglage (37) disposé sur les entraîneurs (18) au moins entre une position de transport et une position de dépose pour la dépose du chapelet de saucisses (12) sur la broche (14), et un élément d'espacement (26) est disposé sur les entraîneurs (18) pour l'écartement de la paire de saucisses retenue dans le crochet (20), **caractérisée en ce que** plusieurs entraîneurs (18) sont disposés dans une cassette et la cassette peut être enlevée du dispositif de transport (16), et une nouvelle cassette peut être posée avec des entraîneurs sur le dispositif de transport (16).

2. Installation selon la revendication 1, **caractérisée en ce que** l'élément d'espacement (26) est constitué sous la forme d'une plaque avec des creux (36a, 36b) latéraux.

3. Installation selon l'une des revendications précédentes, **caractérisée en ce que** le crochet (20) est formé d'une plaque munie d'une entaille se rétrécissant vers l'intérieur.

4. Installation selon la revendication 2 ou 3, **caractérisée en ce que** le crochet (20) est disposé au-dessus de l'élément d'espacement (26) et entre les creux (36a, 36b) de celui-ci.

5. Installation selon l'une des revendications précédentes, **caractérisée en ce que** l'élément d'espacement (26) et le crochet (20) peuvent pivoter conjointement par le biais du moyen de réglage (37).

6. Installation selon l'une des revendications précédentes, **caractérisée en ce que** l'espacement des entraîneurs (18) disposés sur le dispositif de transport (16) dans la position de transport des entraîneurs (18) dans le tronçon (28) rectiligne du dispositif de transport (16) est plus faible que le diamètre des saucisses (32) du chapelet de saucisses (12) à disposer.

7. Installation selon l'une des revendications précédentes, **caractérisée en ce que** le moyen de réglage (37) présente un axe (38) qui est supporté en rotation sur le corps de base (30a, 30b) de l'entraîneur (18).

8. Installation selon la revendication 7, **caractérisée en ce que** l'axe (38) présente un tronçon extrême (44) coudé dont l'extrémité libre est coudée parallèlement à un tronçon principal (42) de l'axe (38).

9. Installation selon la revendication 8, **caractérisée en ce que**, à l'extrémité (47) opposée au tronçon extrême (44) coudé, le tronçon principal (42) de l'axe (38) dépasse du corps de base (30a, 30b) de l'entraîneur (18).

10. Installation selon l'une des revendications 8 ou 9, **caractérisée en ce qu'**un galet (46) est disposé sur le tronçon extrême (44) coudé.

11. Installation selon l'une des revendications précédentes, **caractérisée en ce que** l'installation (10) présente un rail (50) pour la réception du tronçon extrême ou des galets (46) disposés sur le tronçon extrême, dans laquelle le crochet (20) peut, par le relèvement (48) ou l'abaissement du rail (50), pivoter entre sa position de transport et sa position de dépose.

12. Installation selon l'une des revendications précédentes, **caractérisée en ce que** des broches de section transversale ronde ou triangulaire peuvent être reçues dans le support de broche.
